**Europäisches Patentamt**

**European Patent Office**

**Office européen des brevets**

(19)

(11) Veröffentlichungsnummer: **0 306 657**
**B1**

(12) **EUROPÄISCHE PATENTSCHRIFT**

(45) Veröffentlichungstag der Patentschrift:
20.06.90

(51) Int. Cl.⁵: **C03B 5/235**, C03B 5/04,
F27B 3/22

(21) Anmeldenummer: 88111099.3

(22) Anmeldetag: 12.07.88

(54) Glasschmelzofen.

(30) Priorität: 08.09.87 DE 3730036

(43) Veröffentlichungstag der Anmeldung:
15.03.89 Patentblatt 89/11

(45) Bekanntmachung des Hinweises auf die Patenterteilung:
20.06.90 Patentblatt 90/25

(84) Benannte Vertragsstaaten:
FR GB IT

(56) Entgegenhaltungen:
US-A- 2 662 761
US-A- 3 353 941
US-A- 3 895 906
US-A- 4 000 962

CERAMIC ENGINEERING AND SCIENCE
PROCEEDINGS; Band 9, Nr. 3/4, März-April 1988,
Seiten 168-177; H.A. ABBASI et al.:"Combustion
modifications for control of NOx emissions from glass
melting furnaces"*Seiten 169, 174*
CERAMIC ENGINEERING AND SCIENCE
PROCEEDINGS, Band 5, Nr. 1/2, Januar-Februar 1984,
Seiten 128-149; H.A. ABBASI et al.:"Evaluation of NOx
emission on a pilot-scale furnace"*Seite 133, letzter
Absatz - Seite 134, erster Absatz - Seite 134, erster
Absatz; Seite 136*din-5-ones"NDEX, CHEMICAL

(73) Patentinhaber: KÖRTING HANNOVER AG, Badenstedter
Strasse 56, D-3000 Hannover 91(DE)

(72) Erfinder: Wiedmann, Uwe, Dr.-Ing., Salzweg 53,
D-3003 Ronnenberg 1(DE)
Erfinder: Sieger, Werner, Gevekerkamp 45,
D-3000 Hannover 91(DE)

(74) Vertreter: Leine, Sigurd, Dipl.-Ing. et al, Dipl.-Ing. Sigurd
Leine Dipl.-Phys. Dr. Norbert König Patentanwälte
Burckhardtstrasse 1, D-3000 Hannover 1(DE)

(56) Entgegenhaltungen: (Fortsetzung)
SUBSTANCES, page 52194cs, right-hand column, 3rd
compound 000

**Beschreibung**

Die Erfindung betrifft einen Glasschmelzofen der im Oberbegriff des Anspruchs 1 genannten Art.

Durch den Aufsatz "Erfahrungen mit Erdgasbrennern an Glasschmelzöfen" von Werner Sieger in der so betitelten Firmendruckschrift der Firma Körting Hannover AG, veröffentlicht am 7. April 1986 in der Sitzung des Fachausschusses Nr.2 "Ofenbau und Wärmewirtschaft der deutschen glastechnischen Gesellschaft", ist ein Ofen der betreffenden Art bekannt, bei dem die Düse zur Zuführung von Brenngas durch eine Strahlpumpe gebildet ist, deren Druckseite mit einer Druckgasquelle und deren Saugseite mit der Umgebungsluft verbunden ist. Durch die Beimischung von Luft zu dem Brenngas vor Eintritt in den Ofen soll die Form und die Länge der Flamme beeinflußt werden, so daß diese ihre Wärme relativ schnell über eine große Fläche an das Glasbad abgibt, ohne daß lange, bis in den Abzugsbereich schlagende Gasflammen entstehen, was einen hohen Energieverlust zur Folge haben würde. Die Beimischung von Luft zum Brenngas führt aber zu hohen Temperaturspitzen im mischungsintensiven, mündungsnahen Bereich der Düse des Brenners, was den Nachteil einer Erhöhung der Bildung von Stickoxiden ($NO_X$) zur Folge hat.

Durch den Aufsatz "Maßnahmen zur Reduzierung der $NO_X$Emission von Gasbrennern" von Lajos Joof und Otto Menzel in der Zeitschrift "GWF - Gas/Erdgas" 126, 1985, Heft 2, Seite 73 - 86, ist die Rückführung ausgebrannter Rauchgase in die Verbrennungsluft bekannt. Hierdurch erfolgt zwar eine allgemeine Absenkung der Verbrennungstemperatur und eine Verringerung des $O_2$-Partialdruckes, jedoch werden deutliche $NO_x$-Minderungen erst bei Rauchgasmengen von über 10% bis zu etwa 20% erzielt. Eine Beeinflussung von Flammbild und Flammlänge erfolgt hierdurch jedoch nicht, so daß die zuvor geschilderte Maßnahme erforderlich ist, um dem Brenngas einen geringen Prozentsatz Luft beizumischen.

Durch die Zeitschrift "CERAMIC ENGINEERING AND SCIENCE PROCEEDINGS, Band 5, Nr. 1/2, Januar–Februar 1984, Seiten 128–149; H.A. Abbasi et al.: "Evaluation of $NO_X$ emission on a pilotscale furnace" ist es bekannt, bei einem Brenner eine Stufenverbrennung durchzuführen, indem Luft stufenweise zugeführt wird, so daß im inneren Brennerbereich mit unterstöchiometrischer Luftzahl gearbeitet wird und eine endgültige Verbrennung erst in im Querschnitt weiter außen liegenden und in Flammrichtung weiter hinten liegenden Bereichen stattfindet. Im inneren Brennerbereich wird unter in hohem Maße brenngasreichen Bedingungen gearbeitet, und die restliche Luft wird erst dann zugeführt, wenn die primäre, brenngasreiche Flamme einen Teil der Wärme abgegeben hat. Hierdurch tritt zwar eine $NO_x$-Minderung ein, eine vorteilhafte Beeinflussung von Flammbild und Flammlänge läßt sich jedoch hierdurch nicht erzielen. Außerdem führt die starke Absenkung der Sauerstoffwerte im wurzelnahen Bereich der Flamme zu Reduktionszonen oberhalb des Glasspiegels, die eine Läuterung des Glasbades erschweren.

Der Erfindung liegt die Aufgabe zugrunde, einen Glasschmelzofen der betreffenden Art zu schaffen, bei dem die Bildung von Stickoxiden gering ist bei gleichzeitig vorteilhafter Ausbildung von Flammbild und Flammlänge.

Die der Erfindung zugrundeliegende Aufgabe wird durch die im Kennzeichen des Anspruchs 1 angegebene Lehre gelöst.

Nach dieser Lehre erfolgt eine Stufenverbrennung nicht vom Brenner aus, sondern durch Zuführung von Verbrennungsluft entlang der Flamme, so daß sich durch die Lage der Zuführungsstellen und der zugeführten Luftmengen die Stufenverbrennung entlang der Flamme kontrollieren läßt. Dabei gilt natürlich die bei einer Stufenverbrennung bekannte Voraussetzung eines nah- oder unterstöchiometrischen Betriebs der Feuerung. Die Stickoxidbildung läßt sich gering halten, da die Zuführung von Luft zum Brenngas zur Beeinflussung von Flammbild und Flammlänge nicht erforderlich ist, was eine erhöhte Temperatur im Wurzelbereich der Flamme und damit eine erhöhte Stickoxidbildung zur Folge haben würde.

Zweckmäßigerweise sind in Strömungsrichtung der Flamme hintereinander mehrere Öffnungen zur Zuführung von Teilen der zur Verbrennung des Brenngases notwendigen Luft vorgesehen. Genaue Lage, Größe und Abstand der Öffnungen für die stufenweise Zuführung von Luft können nach Belieben und in Abhängigkeit von der jeweiligen Ofenform gewählt werden.

Eine zweckmäßige Weiterbildung der Erfindung besteht darin, daß die Öffnung bzw. Öffnungen in der Brennkammer dicht oberhalb des Glasbades angeordnet sind. Die Menge der durch die Öffnungen zugeführten Luft läßt sich in zweckmäßiger Weise durch Strömungswiderstände einstellen, die den Öffnungen vorgeschaltet sind. Die Luft wird zweckmäßigerweise von dem Kanal zur Zuführung von Luft in die Brennkammer abgeleitet.

Um trotz geringer Querschnitte der Öffnungen für die stufenweise Zuführung von Luft die Zuführung der nötigen Menge von Luft sicherzustellen, ist es gemäß einer Weiterbildung der Erfindung zweckmäßig, die Öffnungen an den Ausgang einer Strahlpumpe anzuschließen, deren Saugseite mit dem Kanal zur Zuführung von Luft und deren Treibseite an eine Treibgasquelle angeschlossen ist.

Anhand der Zeichnung soll die Erfindung näher erläutert werden.

Fig. 1 zeigt ein Ausführungsbeispiel eines Glasschmelzofens gemäß der Erfindung in einem Vertikalschnitt und
Fig. 2 ist ein Horizontalschnitt II-II durch Fig. 1.

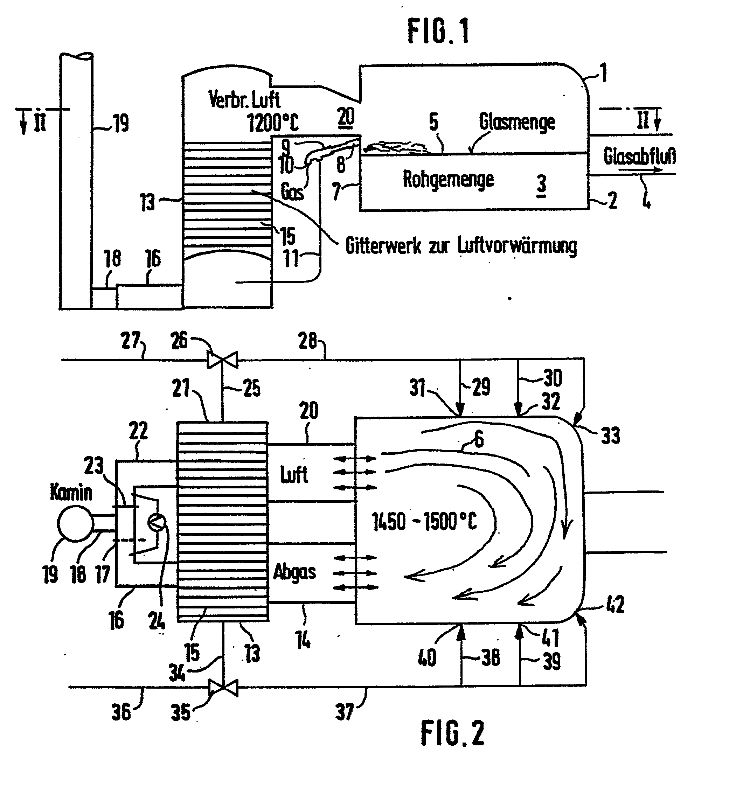

Die Fig. 1 und 2 zeigen einen Ofen 1, dessen unterer Teil eine Glasschmelzwanne 2 bildet, in der sich ein Rohgemenge 3 aus Glas befindet, das durch einen Abflußkanal 4 abfließen kann. Auf dem Rohgemenge befindet sich Glasgemenge 5, über das dicht eine langgestreckte Flamme hinwegstreicht, die durch Pfeile 6 in Fig. 2 angedeutet ist.

Zur Flammbildung befindet sich in einer Wand 7 des Ofens 1 eine Öffnung, in die dicht eine Düse 8 einer Strahlpumpe 9 eingesetzt ist, die über eine Gasdruckleitung 10 Brenngas erhält und über eine Saugleitung 11 Abgas aus einer Kammer 13, die durch einen Kanal 14 mit dem oberen Bereich des Ofens 1 verbunden ist.

Das Abgas aus dem Ofen 1 gelangt über den Kanal 14 in den oberen Bereich der Kammer 13 und strömt dort nach unten durch ein Gitterwerk 15 und gelangt über eine Abgasleitung 16, einen Schieber 17 und einen Zug 18 in einen Kamin 19. In der dargestellten Lage ist der Schieber 17, angedeutet durch eine gestrichelte Linie, geöffnet.

Seitlich neben dem Kanal 14 befindet sich ein weiterer Kanal 20 zur Verbindung des oberen Teils des Ofens 1 mit einer weiteren Kammer 21, die in gleicher Weise wie die Kammer 13 im unteren Bereich durch eine Abgasleitung 22 und einen Schieber 23 mit dem Zug 18 und dem Kamin 19 verbunden ist. In der gezeigten Lage ist der Schieber 23, angedeutet durch eine ausgezogene Linie, geschlossen. Durch eine nicht im einzelnen dargestellte Einrichtung 24 sind die Abgasleitungen 16 bzw. 22 mit der Atmosphäre verbindbar, wenn der jeweils zugehörige Schieber 23 bzw. 17 geschlossen ist. In der Darstellung der Fig. 1 und 2 ist der Schieber 23 geschlossen, so daß die Abgasleitung 16 mit der Atmosphäre verbunden ist und so Luft unten in die Kammer 21 eintritt, sich dort durch das heiße Gitterwerk 15 erwärmt und schließlich durch den Kanal 20 in den oberen Teil des Ofens 1 eintritt und die wesentliche Verbrennungsluft für das aus der Düse 8 eintretende Brenngas bildet. Ist in der dargestellten Arbeitslage das Gitterwerk 15 in der Kammer 13 erhitzt, so wird die Arbeitsweise umgekehrt. Das bedeutet, daß jetzt der Schieber 23 geöffnet, die Verbindung der Abgasleitung 22 mit der Atmosphäre durch die Einrichtung 24 unterbrochen und eine Verbindung zwischen der Atmosphäre und der Abgasleitung 16 hergestellt sowie der Schieber 17 geschlossen wird. Gleichzeitig wird die Düse 8 abgeschaltet, während eine weitere, in der Zeichnung nicht dargestellte Düse in dem Kanal 14 in Betrieb gesetzt wird, so daß der Kanal 14 als Luftleitung zur Zuleitung von Brennluft dient, die zuvor in dem Gitterwerk 15 erwärmt worden ist. Die Flamme verläuft dann in umgekehrter Richtung zur Richtung der Pfeile 6 in Fig. 2. Von der Kammer 21 führt eine Leitung 25 zu einer Strahlpumpe 26, deren Treibdüse an eine Leitung 27 angescglossen und von dieser mit Preßluft versorgt wird. Die Druckseite der Strahlpumpe 26 ist über eine Leitung 28 und Abzweigleitungen 29 und 30 mit Öffnungen 31, 32 und 33 verbunden, die sich in dem Ofen 1 dicht oberhalb des Glasgemenges 5 befinden und besonders deutlich in Fig. 1 erkennbar sind, während sie in Fig. 2 lediglich schematisch durch Pfeile angedeutet sind.

Da es sich bei dem dargestellten Ausführungsbeispiel um einen Umkehrofen handelt, ist natürlich auch die Kammer 13 über eine weitere Leitung 34 mit einer Strahlpumpe 35 verbunden, deren Treibdüse mit einer Leitung 36 zur Zuführung von Preßluft verbunden ist. Die Druckseite der Strahlpumpe 35 ist über eine Leitung 37 und Abzweigleitungen 38 und 39 mit Öffnungen 40, 41 und 42 verbunden, die den Öffnungen 31-33 entsprechen.

Bei Betrieb saugt in der dargestellten Arbeitslage, in der Luft von der Kammer 21 her die Brennluft bildet, die Strahlpumpe 26 Luft über die Leitung 25 von der Kammer 21 ab und drückt sie über die Leitung 28 und die Abzweigleitungen 29 und 30 zu den Öffnungen 31-33. Der durch die Pfeile 6 angedeuteten Flamme wird daher stufenweise nacheinander zusätzliche Luft zur Verbrennung zugeführt. Die Luft wird dabei dicht oberhalb des Glasgemenges 5 eingeleitet, so daß sie zwischen dieser und der eigentlichen Flamme geschichtet ist. Somit kann trotz stickstoffarmer Verbrennung die Bildung von Reduktionszonen oberhalb des Glasspiegels vermieden werden, so daß auch die Läuterung des Glasbades gut ist.

**Patentansprüche**

1. Glasschmelzofen (1), mit einer Brennkammer, mit einer Düse (8) zur Zufuhr von Brennstoff in die Brennkammer und mit einem davon getrennten Kanal (14 oder 20) zur Zuführung von Luft in die Brennkammer, **dadurch gekennzeichnet,** daß stromabwärts von der Düse (8) in der Brennkammer wenigstens eine Öffnung (31-33, 40-42) zur Zuführung eines Teils der zur Verbrennung des Brennstoffes notwendigen Luft vorgesehen ist.

2. Glasschmelzofen nach Anspruch 1, **dadurch gekennzeichnet,** daß in Strömungsrichtung hintereinander mehrere Öffnungen (31-33, 40-42) zur Zuführung von Teilen der zur Verbrennung des Brennstoffes notwendigen Luft vorgesehen sind.

3. Glasschmelzofen nach Anspruch 1 oder 2, **dadurch gekennzeichnet,** daß die Öffnung bzw. Öffnungen (31-33, 40-42) in der Brennkammer dicht oberhalb des Glasbades (35) angeordnet sind.

4. Glasschmelzofen nach einem der vorhergehenden Ansprüche, **dadurch gekennzeichnet,** daß die Öffnung bzw. Öffnungen (31-33) mit dem Kanal (20) zur Zuführung von Luft in die Brennkammer verbunden sind.

5. Glasschmelzofen nach Anspruch 4, **dadurch gekennzeichnet,** daß die Öffnungen (31-33, 40-42) an den Ausgang einer Strahlpumpe (25, 35) angeschlossen sind, deren Saugseite mit dem Kanal (20, 14) zur Zuführung von Luft in die Brennkammer und deren Treibdüse an eine Treibgasquelle angeschlossen ist.

6. Glasschmelzofen nach Anspruch 4, **dadurch gekennzeichnet,** daß zur Einstellung der aus der Öffnung bzw. den Öffnungen (31-33, 39-41) in die Brennkammer austretenden Luft den Öffnungen (31-33, 40-42) jeweils ein Strömungswiderstand vorgeordnet ist.

**Claims**

1. A glass melting furnace (1) with a combustion chamber having a nozzle (8) for feeding fuel into the combustion chamber and separate from it a channel (14 or 20) for feeding air into the combustion chamber, characterized in that downstream of the nozzle (8) at least one opening (31–33, 40–42) is provided in the combustion chamber for feeding in part of the air necessary to the combustion of the fuel.

2. A glass melting furnace as in Claim 1, characterized in that a number of openings (31–33, 40–42) is provided one behind the other in the direction of flow, each for feeding in part of the air necessary to the combustion of the fuel.

3. A glass melting furnace as in Claim 1 or 2, characterized in that the opening or openings (31–33, 40–42) are arranged in the combustion chamber just above the bath (35) of glass.

4. A glass melting furnace as in one of the preceding Claims, characterized in that the opening or openings (31–33) are connected to the channel (20) for feeding air into the combustion chamber.

5. A glass melting furnace as in Claim 4, characterized in that the openings (31–33, 40–42) are connected to the outlet from an injector (25, 35) of which the suction side is connected to the channel (20, 14) for feeding air into the combustion chamber and the power nozzle is connected to a source of power gas.

6. A glass melting furnace as in Claim 4, characterized in that for adjusting the air leaving the openings (31–33, 39–41) into the combustion chamber a means of resisting flow is in each case arranged before the openings (31–33, 40–42).

**Revendications**

1. Four de verrerie (1), avec une chambre de combustion, avec une buse (8) pour l'amenée de combustible dans la chambre de combustion et avec un canal (14 ou 20) qui en est séparé pour l'amenée d'air nécessaire à la combustion du combustible, est prévue dans la chambre de combustion en aval de la buse (8) dans le sens d'écoulement.

2. Four de verrerie selon la revendication 1, caractérisé en ce que plusieurs ouvertures (31–33, 40–42) pour l'amenée de parties de l'air nécessaire à la combustion du combustible sont prévues les unes derrière les autres dans la direction d'écoulement.

3. Four de verrerie selon la revendication 1 ou 2, caractérisé en ce que l'ouverture ou les ouvertures (31–33, 40–42) sont disposées dans la chambre de combustion juste au-dessus du bain de verre (35).

4. Four de verrerie selon l'une des revendications précédentes, caractérisé en ce que l'ouverture ou les ouvertures (31–33) sont reliées au canal (20) pour l'amenée d'air dans la chambre de combustion.

5. Four de verrerie selon la revendication 4, caractérisé en ce que les ouvertures (31–33, 40–42) sont raccordées à la sortie d'une pompe à jet (25, 35) dont le côté d'aspiration est raccordé au canal (20, 14) pour l'amenée d'air dans la chambre de combustion, et dont la buse de propulsion est raccordée à une source de gaz de propulsion.

6. Four de verrerie selon la revendication 4, caractérisé en ce qu'une résistance d'écoulement est intercalée respectivement devant les ouvertures (31–33, 40–42) pour le réglage de l'air sortant de l'ouverture ou des ouvertures (31–33, 39–42) dans la chambre de combustion.

## FIG.1

Verbr. Luft
1200°C

20

5 Glasmenge

1

II

Glasabfluß

9
10
8

Rohgemenge     3

2

4

13

Gas

7

15
11

Gitterwerk zur Luftvorwärmung

19

II

18     16

---

27     26                    28

21        25           20                    31   29   30        32

22                                                            33

23                                   Luft

Kamin                                              6

19  18  17                      1450 - 1500°C

16    24                        Abgas

15       13              14                              42

34                                              40   38   41   39

36     35              37

## FIG.2